# EUROPÄISCHE PATENTSCHRIFT

(11) **EP 0 952 520 B1**
(45) Veröffentlichungstag und Bekanntmachung des Hinweises auf die Patenterteilung: **05.10.2016**
(21) Anmeldenummer: 99104451.2
(22) Anmeldetag: 05.03.1999
(51) Int. Cl.: G06F 11/18, H05K 7/00

(54) **Vorrichtung zur fehlertoleranten Ausführung von Programmen**
Device for fault tolerant execution of programs
Dispositif d'exécution de programmes tolerante aux pannes

(30) Priorität: 04.04.1998 DE 19815263
(43) Veröffentlichungstag der Anmeldung: 27.10.1999
(73) Patentinhaber: Astrium GmbH, 85521 Ottobrunn (DE)
(72) Erfinder: Urban, Gerhard, 28201 Bremen (DE); Fischer, Heinrich, 28199 Bremen (DE)
(74) Vertreter: Marschall, Stefan

(56) Entgegenhaltungen:
- DE-A1- 4 401 168
- GB-A- 2 097 563
- US-A- 4 015 246
- US-A- 5 313 628
- YELVERTON J N: "Accommodation of non-universal input data errors in cross-strapped redundant computer systems through forward error correction coding" DIGITAL AVIONICS SYSTEMS CONFERENCE, 1993. 12TH DASC., AIAA/IEEE FORT WORTH, TX, USA 25-28 OCT. 1993, NEW YORK, NY, USA,IEEE, US, 25. Oktober 1993 (1993-10-25), Seiten 248-253, XP010117059 ISBN: 0-7803-1343-7

## Beschreibung

Die Erfindung betrifft eine Vorrichtung mit mehreren parallel arbeitenden Recheneinheiten, die zur fehlertoleranten Ausführung von Digitalrechnerprogrammen durch parallelen Betrieb von als Redundanzeinheiten ausgebildeten Recheneinheiten geeignet ist, wobei alle Recheneinheiten über Datenverbindungen, Taktverbindungen und Verbindungen für einen Reset zum Austausch von Datensignalen, Taktsignalen bzw. Signalen zum Einstellen eines Grundzustandes als Wartestellung jeder Recheneinheit über Cross Strapping Verbindungen verbunden sind und jede Recheneinheit als Modul ausgebildet ist.

Eine Vorrichtung dieser Art ist aus der DE 44 01 168 A1 bekannt. Der Redundanzgrad dieser Vorrichtung kann durch einfaches Zu- und Abschaltung von Redundanzeinheiten variabel gestaltet werden. Ferner können verschiedene serielle Bunsinterface-Arten, wie z.B. Feldbus oder MIL-1553 Bus etc. verwendet werden. Die parallel betriebene Steuerung ist dabei unabhängig von dem Prozeßinterface betreibbar. Schließlich wird auch beschrieben, wie die Redundanzeinheiten miteinander zu verbinden sind, damit die Vorrichtung eine fehlertolerante Ausführung der Anwenderprogramme erlaubt.

Diese Vorrichtung hat jedoch auch verschiedene Nachteile. Einerseits muß vor der Konstruktion der Vorrichtung der maximal gewünschte Redundanzgrad bekannt sein, d.h. die Herstellung der Redundanzeinheiten kann nicht unabhängig von der spezifischen Anwendung erfolgen, für die die Vorrichtung vorgesehen ist.

Weiterhin ist bei der Integration verschiedener serieller Businterface-Arten oder Prozeßschnittstellen in der Vorrichtung ein erheblicher technischer Aufwand erforderlich, der hohe Kosten zur Folge hat, da keine standardisierten Schnittstellen für eine Anbindung solcher Busse zur Verfügung stehen.

Schwierigkeiten können auch bei Wartungsarbeiten entstehen, wenn eine oder mehrere Redundanzeinheiten abgeschaltet werden müssen. Dies betrifft auch einen eventuellen Stand-by Betrieb zum Beispiel bei Anwendung in einer Automatisierungsanlage.

Nach der GB-A-2 097 563 ist eine serielle Busarchitektur bekannt geworden, um mehrere Mikroprozessoren miteinander zu verbinden, wobei der Datenaustausch zeitmultiplizierend organisiert ist. Hierbei kommunizieren alle Teilnehmer über die gleiche serielle Datenleitung im Zeitmultiflexverfahren, wobei eine zusätzliche sogenannte Clockleitung verwendet wird. Es werden hierdurch keine Synchronisationen der Prozessoren durchgeführt.

Der Erfindung liegt deshalb die Aufgabe zugrunde, eine Vorrichtung für eine fehlertolerante Ausführung von Programmen der eingangs genannten Art zu schaffen, die wesentlich flexibler auch für verschiedene Anwendungen einsetzbar ist und mit geringerem Aufwand als bisher realisierbar ist und eine Miniaturisierung ermöglicht.

Gelöst wird diese Aufgabe mit einer Merkmalskombination entsprechend Patentanspruch 1. Dadurch ist es möglich, die Vorrichtung generisch für viele unabhängige Anwendungen einzusetzen, ohne daß besondere technische Anpassungen erforderlich sind. Dies hat auch zur Folge, daß die erfindungsgemäße Vorrichtung in großen Stückzahlen hergestellt werden kann. Im Gegensatz zu den bekannten Vorrichtungen, die aus diskreten Bauteilen aufgebaut sind, können nun hochintegrierte Schaltkreise wirtschaftlich hergestellt werden, so daß ein fehlertoleranter Rechner in ähnlichem Format gebaut werden kann, wie es derzeit für einfache Rechner üblich ist.

Während zum Beispiel der in DE 44 01 168 A1 beschriebene, fehlertolerante Rechner in einem Raumfahrtprojekt vier unabhängige Computerboxen erfordert, die mit bis zu drei VME Boards bestückt werden, ist mit der erfindungsgemäßen Lösung eine Realisierung eines solchen Rechners auf einer einzigen VME Platine möglich. Der Gesamtaufwand an Hardware beträgt also nur noch einige wenige hochintegrierte Module von dem Aufwand, wie er bei bekannten, aufgrund der geringen Stückzahlen aus diskreten Bauelementen aufgebauten Rechnern erforderlich ist.

Ein weiterer Vorteil dieser Lösung besteht darin, daß es im Gegensatz zum Stand der Technik möglich ist, ein fehlertolerantes Anwenderprogramm ohne Modifikation sowohl auf einer erfindungsgemäßen Vorrichtung mit mehreren Recheneinheiten (d.h. Redundanzeinheiten), als auch auf einer solchen Vorrichtung mit nur einer Recheneinheit (Simplexbetrieb) auszuführen.

Der verfügbare Redundanzgrad im Simplexbetrieb ist zwar nicht größer als der eins Einfachrechners, ein solcher Betrieb bietet dem Anwender jedoch erhebliche Erleichterungen z.B. bei der Erstinbetriebnahme des Anwenderprogramms, da der Simplexbetrieb zunächst alle Fehler, die durch das Voting entstehen, ausblendet. Außerdem erleichtert der Simplexbetrieb den Stand-by Betrieb einer Automatisierungsanlage erheblich, da nur noch ein n-tel des ursprünglichen Stromverbrauches auftritt. Dieser Vorteil ist besonders bei Raumfahrtanwendungen erheblich. Wenn ein Raumfahrzeug einen sicheren Orbit erreicht hat, kann der Betreiber des Raumfahrzeuges nämlich alle Redundanzeinheiten bis auf eine abschalten, um Energie zu sparen, und zwar ohne Unterbrechung der Anwenderfunktion.

Ein besonderer Vorteil dieser Lösung ergibt sich auch im Falle einer Wartung einer Automatisierungsanlage. So kann z.B. die Automatisierungsanlage für begrenzte Zeit im Simplexbetrieb gefahren werden, während auf den anderen Redundanzeinheiten, die sich dabei in der Wartestellung befinden, ein Austausch der Anwendersoftware erfolgt.

Die Unteransprüche haben vorteilhafte Weiterbildungen der Erfindung zum Inhalt.

Jeder Recheneinheit ist vorzugsweise eine externe Speichereinrichtung zugeordnet.

Außerdem kann mindestens ein Anwendungsprozessor vorgesehen sein, der über einen Mehrprozessor-Bus, wie einen VME-Bus, mit den mindestens einer Recheneinheit verbunden ist.

Eine Recheneinheit zur Anwendung in einer erfindungsgemäßen Vorrichtung zeichnet sich durch ein PPE-Modul mit mindestens einer Mikroprozessor-Steuereinheit zur Steuerung der Funktionen der Recheneinheit sowie zur Durchführung eines Datenvergleichs und eines Datenaustauschs mit anderen gleichen Recheneinheiten aus.

Dieses Modul kann durch ein Multichip Modul, durch eine Hybrid Schaltung, durch ein Piggy Pack Modul, durch ein 'System on a Chip' oder durch ein ähnliches Miniaturmodul realisiert sein. Im folgenden wird dieses Modul Processor Pool Element (PPE) genannt.

Das PPE Modul weist dabei vorzugsweise einen elektrisch lösch- und programmierbaren Lesespeicher für Programme zur Steuerung der Recheneinheit auf.

Weiterhin kann das PPE Modul ein standardisiertes, paralleles Businterface mit Daten-und Steuerleitungen zur Verbindung der Recheneinheit mit mindestens einem seriellen Bus umfassen.

Das PPE Modul weist vorzugsweise eine Steuereinheit zur Fehlerbehandlung sowie ein dieser zugeordnetes, erstes Cross Strapping Interface zur seriellen Verbindung mit anderen Recheneinheiten auf. Das PPE Modul kann auch eine fehlertolerante Taktgeberschaltung zur Zwangssynchronisierung der Recheneinheit mit anderen Recheneinheiten sowie ein zweites, dieser zugeordnetes Cross Strapping Interface zur seriellen Verbindung mit anderen Recheneinheiten umfassen.

Weiterhin umfaßt das PPE Modul vorzugsweise eine Schaltung zur fehlertoleranten Resetsteuerung sowie ein drittes, dieser zugeordnetes Cross Strapping Interface zur entfernten Resetsteuerung auf.

Schließlich ist das PPE Modul vorzugsweise mit einer Schaltung versehen, mit der der Recheneinheit eine diese identifizierende Kennung zugewiesen wird.

Weitere Einzelheiten, Merkmale und Vorteile ergeben sich aus der nachfolgenden Beschreibung bevorzugter Ausführungsformen anhand der Zeichnungen. Es zeigen:
- Fig. 1: ein Prinzipschaltbild einer erfindungsgemäßen Vorrichtung,
- Fig. 2: eine erste äußere Beschaltung einer Recheneinheit für komplexe Fehlertolerante Systeme,
- Fig. 3: eine zweite äußere Beschaltung einer Recheneinheit, für einfache Fehlertolerante Systeme und
- Fig. 4: ein Blockschaltbild des inneren Aufbaus einer Recheneinheit.

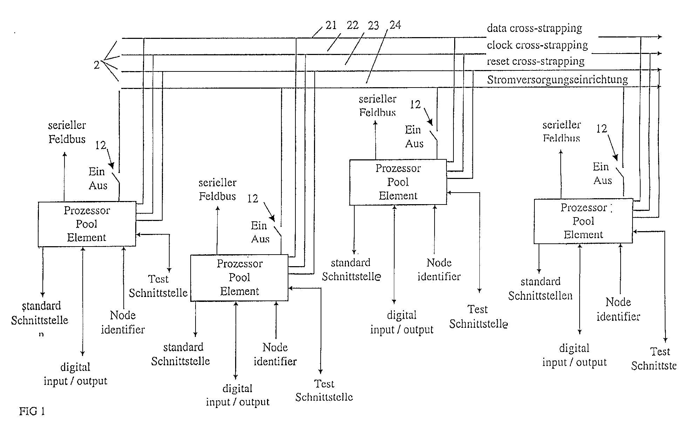

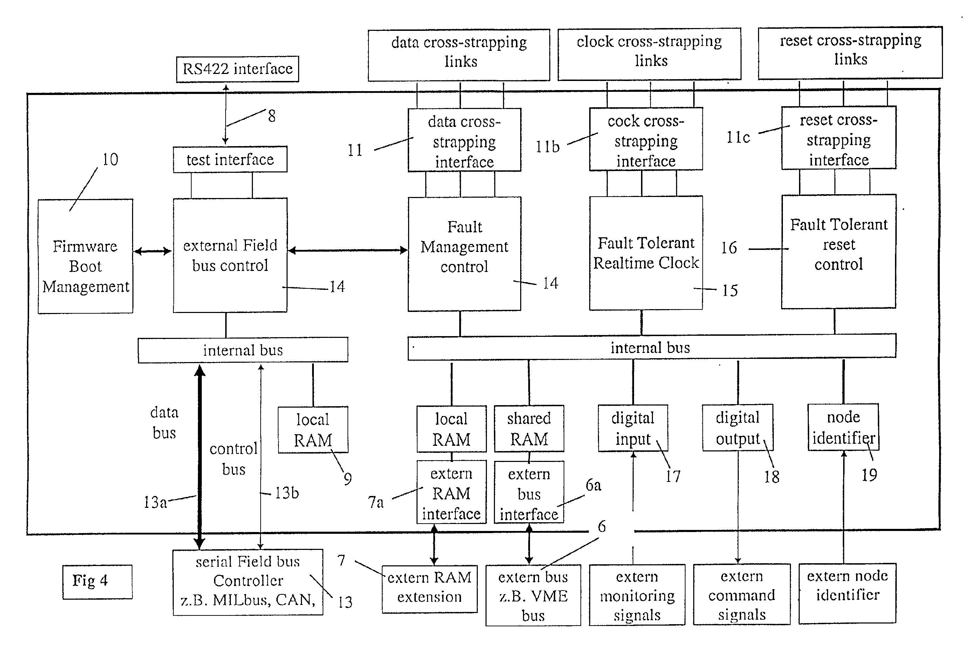

Durch die Erfindung wird gemäß Figur 1 prinzipiell eine flexible Prozessor-Pooltechnologie mit generischen Prozessor-Pool-Elementen (Recheneinheiten (1) ) geschaffen, mit der der erreichbare Redundanzgrad soweit flexibilisiert wird, daß dieser erstens für die Produktion der Computerkomponenten im voraus nicht mehr bekannt sein muß, und daß zweitens der Redundanzgrad bis auf eine Null-Redundanz, auch bezeichnet mit Simplex-Betrieb, reduziert werden kann, ohne daß die Anwenderfunktion unterbrochen wird. Gleichzeitig führt die Erfindung standardisierte Schnittstellen (11) (Fig. 4, s.u.) ein, die zusammen mit den im folgenden beschriebenen Schaltkreisen eine generische Recheneinheit (1) darstellen. Mehrere Recheneinheiten (1) können über verschiedene Cross-Strapping Verbindungen 2 miteinander verbunden werden, so daß eine erfindungsgemäße Vorrichtung zur fehlertoleranten Ausführung von Programmen gemäß Figur 1 entsteht.

Die einzelnen Recheneinheiten (1), die in der Fachsprache auch Fault Containment Region (FCR) genannt werden, sind grundsätzlich zu einer erfindungsgemäßen Vorrichtung integriert. Die Vorrichtung (Rechnerpool) enthält eine beliebige Anzahl von Recheneinheiten (1), die über ihre Schnittstellen (11) miteinander verbunden sind. Zu diesem Zweck weist die Vorrichtung die Verbindungen 2 auf, die für Daten-Cross-Strapping (21), Clock-Cross-Strapping (22), Reset-Cross-Strapping (23) und zur Stromversorgung (24) für beliebig viele Elemente vorgesehen sind.

Wird nur eine Recheneinheit (1) mit einem Schalter (12) eingeschaltet, entsteht automatisch ein Simplex-Rechner, der das Anwenderprogramm ausführt (Null-Redundanz). Werden gleichzeitig mehrere Recheneinheiten 1 über die jeweils zugeordneten Schalter (12) eingeschaltet, entsteht entsprechend der Anzahl der eingeschalteten Recheneinheiten ein Duplex (2 Einheiten eingeschaltet) ein Triplex (3 Einheiten eingeschaltet), ein Quadruplex (4 Einheiten eingeschaltet) oder ein N-plex (N Einheiten eingeschaltet), die parallel das Anwenderprogramm abarbeiten. Konstruktive Elemente innerhalb der Vorrichtung sorgen dafür, daß sich die Gleichzeitigkeit des Einschaltens über einen fest definierten Zeitbereich erstrecken kann. Der Zeitbereich kann mittels der Vorrichtung vorher eingestellt werden.

Der Zeitbereich beginnt mit dem Einschalten der ersten Recheneinheit (1). Werden nach Ablauf des eingestellten Zeitbereiches weitere Recheneinheiten eingeschaltet, nehmen diese nicht mehr an der parallelen Abarbeitung des Anwenderprogramms teil, sondern nehmen automatisch eine Wartestellung ein.

Sind alle Recheneinheiten eingeschaltet und arbeiten alle Recheneinheiten parallel das Anwenderprogramm ab, hat der Rechner die höchste Konfigurationsstufe erreicht (z.B. Quadruplex-Konfiguration, wenn die Vorrichtung maximal vier Recheneinheiten enthält).

Eine Recheneinheit kann jederzeit abgeschaltet werden, und zwar entweder durch Ausschalten, oder durch einen besonderen Reset, den die Vorrichtung bereitstellt. Wird die Recheneinheit über den die Vorrichtung bereitstellenden Reset abgeschaltet, so nimmt die Recheneinheit nicht mehr an der parallelen Abarbeitung des Anwenderprogramms teil und geht in die Wartestellung. Eine Recheneinheit kann also folgende drei Zustände einnehmen: Betrieb, Wartestellung, ausgeschaltet.

Durch spezielle konstruktive Elemente innerhalb der Vorrichtung, (z.B. frequenzmodulierte Signale) an den Schnittstellen der Recheneinheiten, erlaubt die Vorrichtung eine Wiedereingliederung von Recheneinheiten, die sich in der Wartestellung befinden, in das laufende Anwenderprogramm, ohne daß dieses unterbrochen oder neu gestartet werden muß. Durch Wiedereingliederung entsteht aus einem Duplex Rechner z.B. ein Triplex und so weiter. Insbesondere erlaubt die Vorrichtung, daß durch Wiedereingliederung einer Recheneinheit aus einem Simplex-Rechner ein Duplex-Rechner entsteht.

Eine Synchronisiereinrichtung innerhalb der Vorrichtung ermöglicht es, daß alle Recheneinheiten sofort nach dem Einschalten miteinander zwangsysnchronisiert werden. Insbesondere werden auch alle Recheneinheiten zwangssynchronisiert, die sich in der Wartestellung befinden. Zusätzlich zu der internen Zwangssynchronisation kann die gesamte Vorrichtung von extern zwangssynchronisiert werden. Dies bedeutet, daß alle Recheneinheiten zueinander synchron und gleichzeitig extern zwangssynchronisiert sind.

Ist mehr als eine Recheneinheit (1) eingeschaltet, ist mit der Vorrichtung die fehlertolerante Ausführung von Programmen möglich.

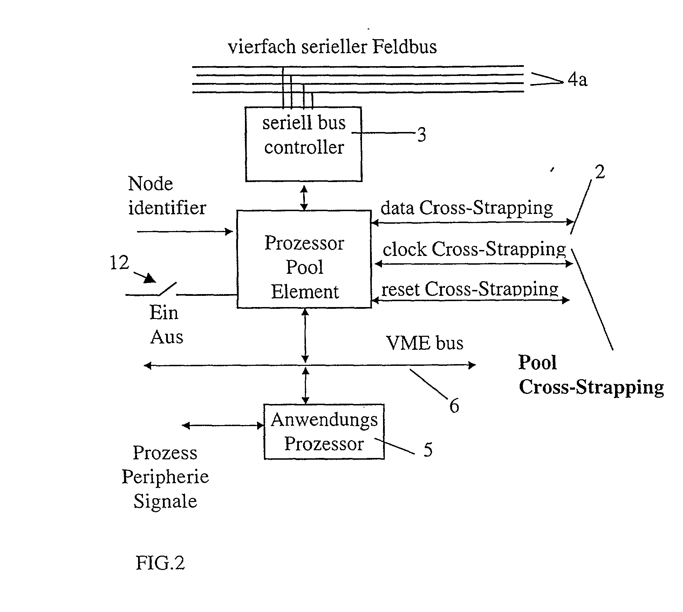

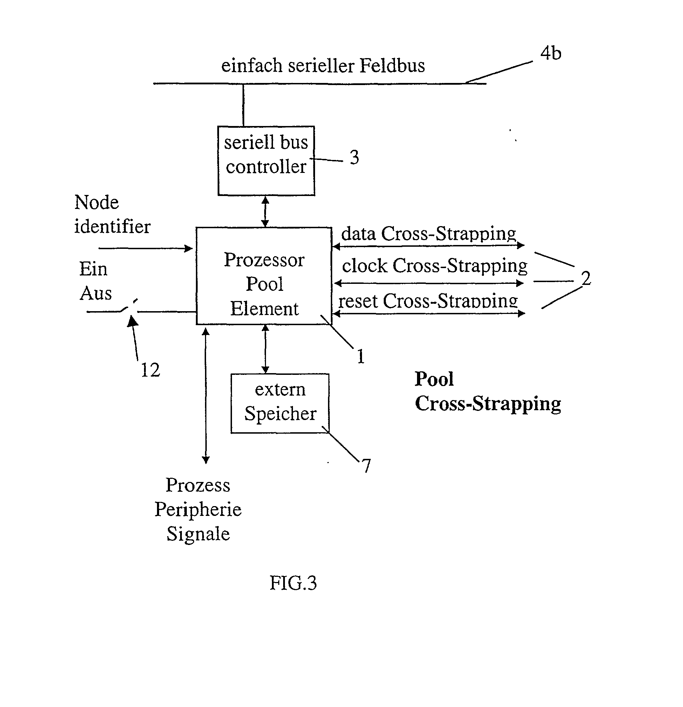

Figur 2 zeigt eine erste äußere Beschaltung einer Recheneinheit (1), durch die eine im Gegensatz zu der in Figur 3 dargestellten zweiten äußeren Beschaltung relativ komplexe Redundanzeinheit entsteht. Der wesentliche Unterschied beider Beschaltungen besteht darin, daß gemäß Figur 2 ein vierfach serieller Feldbus (4a) und gemäß Figur 3 ein einfach serieller Feldbus (4b) verwendet wird. In beiden Fällen sind diese über eine serielle Bus-Steuereinheit (3) mit der Recheneinheit (1) verbunden. Ferner weist die Beschaltung gemäß Figur 2 beispielhaft einen zusätzlichen Anwendungsprozessor (5) auf, der gemeinsam mit der Recheneinheit (1) an einem VME-Bus (6) liegt, während die Beschaltung gemäß Figur 3 beispielhaft mit einem externen Speicher (7) versehen ist. Beide Beschaltungen umfassen schließlich auch den Ein-/Ausschalter (12).

Zur Ausführung der beschriebenen Funktionen und zur wirksamen Integration der verschiedenen seriellen Busse sowie des Prozeßinterface umfaßt eine Recheneinheit gemäß Figur 4 ein PPE Modul mit einem oder zwei leistungsstarken Mikroprozessor-Steuereinheiten, die alle wesentlichen Funktionen der Recheneinheit, insbesondere die Verbindung zum seriellen Datenbus und die Durchführung des Datenvergleichs und des Datenaustauschprinzipes steuern.

Im einzelnen umfaßt das PPE Modul einen elektrisch löschbaren und programmierbaren Lesespeicher (9), in dem die Programme zur Steuerung der Recheneinheit enthalten sind. Der Lesespeicher ist konstruktiv so ausgelegt, daß er automatisch nach dem Einschalten seine gespeicherten Programme an die Mikroprozessor-Steuereinheiten (14a) und (14b) übergibt. Gleichzeitig kann der Lesespeicher über die dargestellte Testschnittstelle (8) und einen speziellen Sicherheitscode in der Hardware mit neuen Programmen geladen werden.

Zur Anbindung serieller Busse enthält PPE Modul ein standardisiertes, paralleles Businterface (13) mit Datenleitungen (13a) und Steuerleitungen (13b). Eine in dem PPE Modul integrierte Steuereinheit (14) sorgt dafür, daß sich das PPE Modul an das elektrische Verhalten des ausgewählten, seriellen Buscontrollers anpassen kann, ohne daß ein zusätzlicher Bauteileaufwand entsteht.

Zum Datenaustausch der Recheneinheiten untereinander enthält das PPE Modul bereits ein geeigetes Daten-Cross Strapping Interface (11a), das die geforderte serielle Datenübertragung vornimmt und gleichzeitig die galvanische Isolation enthält. Die Anzahl der enthaltenen, unabhängigen seriellen Schnittstellen ist über einen Mikrocode so einstellbar, daß auch ein N-plex System mit N Recheneinheiten konfiguriert werden kann.

Zur internen- und externen Zwangssynchronisation der Recheneinheiten untereinander enthält das PPE Modul einen fehlertoleranten Taktgeber-Schaltkreis (15) und ein geeignetes Clock- Cross Strapping Interface (11b), welches die notwendige Signalverteilung mit den anderen Recheneinheiten vornimmt und gleichzeitig für die galvanische Trennung der Signale sorgt. Über eine externe Kodierung kann die Frequenz des Taktgebers vorgegeben werden. Zusätzlich läßt sich die Frequenzdes Taktgebers auch über ein internes Register, das der Schaltkreis zur Verfügung stellt, einstellen. Die Anzahl der Taktsignale läßt sich über einen Microcode so einstellen, daß auch ein N-plex System mit N Recheneinheiten konfiguriert werden kann.

Zur Zwangsabschaltung fehlerhafter Recheneinheiten und zur Unterstützung des kompletten Funktionsablaufs der Vorrichtung enthält jedes PPE Modul einen Reset Schaltkreis (16) für die fehlertolerante Abschaltung benachbarter PPE Module. Zusätzlich dazu enthält jedes PPE Modul ein geeignetes Reset- Cross Strapping Interface (11c), das die notwendige Reset-Signalverteilung und die galvanische Trennung von den anderen Recheneinheiten vornimmt. Die Anzahl der Reset Signale läßt sich über einen Microcode so einstellen, daß auch ein N-plex System mit N Recheneinheiten konfiguriert werden kann und dieses in der Lage ist, fehlerhafte Recheneinheiten über das Reset Management zu passivieren.

Jedes PPE Modul umfaßt weiterhin eine digitale Eingangsschnittstelle (17) und Ausgangsschnittstelle (18), mit deren Hilfe jederzeit Systemsignale aufgezeichnet und protokolliert und auch Systemsteuerfunktionen übernommen werden können. Diese Schnittstelle soll vor allem den Aufbau sehr kleiner Redundanzeinheiten erleichtern, bei denen aufgrund des geringen Automatisierungsgrades auf eine eigene Prozessschnittstelle (6) gänzlich verzichtet wird.

Für die Organisation des Funktionsablaufes der Vorrichtung ist es wichtig, daß jede Recheneinheit mit einer eineindeutigen Kennung markiert ist. Diese Aufgabe wird durch einen im PPE Modul integrierten Node.id -Schaltkreis (19) realisiert. Dazu wird jede Recheneinheit mit einer externen Codierung versehen, die für jede Recheneinheit nur einmal vergeben wird. Der Node.id -Schaltkreis (19) interpretiert die eingestellte Kodierung und generiert eine eineindeutige Kennung, die auch einen Mehrfachbitfehler toleriert.

Jedes PPE Modul umfaßt weiterhin einen internen Schreib- / Lesespeicher (9), der über eine Einrichtung zur Fehlererkennung und -korrektur (Error Detection and Correction - EDAC) verfügt.

Damit die Recheneinheit auch für Anwendungen mit einem großen Automatisierungsgrad verwendet werden kann, enthält das Multichip PPE Module eine geeignete parallele Datenbus -Schnittstelle (7a) zur Erweiterung des internen Schreib- Lesespeicher mit externen RAM-Speicherbausteinen (7). Diese Schnittstelle enthält alle dafür notwendigen Daten- und Steuerleitungen.

Zur problemlosen Anbindung externer Prozessschnittstellen (6) weist das PPE Modul schließlich auch einen eigenen Schreib- / Lesespeicher -Schaltkreis (6a) (z.B. Dual Port RAM) auf, der sowohl von den internen Multichip Processor-Steuereinheiten addressierbar ist, als auch von einem beliebigen externen Microprocessor, der sich in der externen Prozesssteuerung befindet. Zugriffskonflikte, die bei gleichzeitiger Addressierung entstehen können, werden von dem Schreib- / Lesespeicher -Schaltkreis automatisch so geregelt, daß keine Datenverluste entstehen. Die Integration des dualen Schreib- / Lesespeichers in das PPE Modul erlaubt vor allem den Aufbau von z.B VME-kompatiblen Redundanzeinheiten mit nur geringem, zusätzlichen externen Bauteileaufwand. Dies ist insbesondere für Redundanzeinheiten erforderlich, die für einen größeren Automatisierungsgrad vorgesehen sind und bei denen eine zusätzliche, unabhängige Prozessschnittstelle (6) integriert wird.

## Patentansprüche

1. Vorrichtung mit mehreren parallel arbeitenden Recheneinheiten, die zur fehlertoleranten Ausführung von Digitalrechnerprogrammen durch parallelen Betrieb von als Redundanzeinheiten ausgebildeten Recheneinheiten geeignet ist, wobei jede Recheneinheit (1) als Modul ausgebildet ist, und eine beliebige Anzahl an Rechnereinheiten über Datenleitungen (21) zum Austausch von Datensignalen, Taktleitungen (22) zur Zwangssynchronisation und Resetleitungen (23) zum Abschalten einer Recheneinheit parallelschaltbar ist, wobei beim Abschalten einer Recheneinheit mittels der Resetsignale die Recheneinheit nicht mehr am parallelen Betrieb teilnimmt und in eine Wartestellung übergeht, wobei jede Recheneinheit eine Mikroprozessor-Steuereinheit (14a, 14b) zur Steuerung der Funktionen der Recheneinheit, zur Durchführung eines Datenvergleichs, des Datenaustauschs und zur Fehlerbehandlung sowie einen Reset-Schaltkreis (16) für eine fehlertolerante Abschaltung einer benachbarten Recheneinheit aufweist, **dadurch gekennzeichnet, dass** die Datenleitungen (21), Taktleitungen (22) und Resetleitungen (23) Cross-Strapping-Verbindungen sind und dass die Recheneinheiten einen Schaltkreis (19) zur Generierung einer der Recheneinheit zugewiesenen eineindeutigen Kennung und einen Schreib-/Lesespeicher (9) mit einer Einrichtung zur Fehlererkennung und - korrektur aufweisen.

2. Vorrichtung nach Anspruch 1, **gekennzeichnet durch** eine jeder Recheneinheit (1) zugeordnete externe Speichereinrichtung (7).

3. Vorrichtung nach Anspruch 1 oder 2, **gekennzeichnet durch** mindestens einen Anwendungsprozessor (5), der über einen Mehrprozessorbus, wie einen VME-Bus (6), mit mindestens einer Recheneinheit (1) verbunden ist.

4. Vorrichtung nach einem der Ansprüche 1 bis 3, **dadurch gekennzeichnet, dass** das Modul ein Processor Pool Element ist und einen elektrisch lösch-und programmierbaren Lesespeicher für Programme zur Steuerung der Recheneinheit aufweist.

5. Vorrichtung nach Anspruch 4, **dadurch gekennzeichnet, dass** das Processor Pool Element Modul ein standardisiertes, paralleles Businterface mit Daten-und Steuerleitungen zur Verbindung der Recheneinheit mit mindestens einem seriellen Bus aufweist.

6. Vorrichtung nach einem der Ansprüche 4 oder 5, **dadurch gekennzeichnet, dass** das Processor Pool Element Modul eine fehlertolerante Taktgeberschaltung (15) zur Zwangssynchronisierung der Recheneinheit (1) mit anderen Recheneinheiten sowie ein zweites, dieser zugeordnetes Cross Strapping Interface (llb) zur seriellen Verbindung mit anderen Recheneinheiten aufweist.

7. Vorrichtung nach einem der Ansprüche 4 bis 6, **dadurch gekennzeichnet, dass** das Processor Pool Element Modul eine Schaltung (16) zur fehlertoleranten Resetsteuerung sowie ein drittes, dieser zugeordnetes Cross Strapping Interface (llb) zur entfernten Resetsteuerung aufweist.

## Claims

1. A device having a plurality of parallel operating computing units, which is suitable for the error-tolerant execution of digital computer programs by means of the parallel operation of computing units constructed as redundancy units, wherein each computing unit (1) is constructed as a module, and an arbitrary number of computer units can be connected in parallel via data lines (21) for the exchange of data signals, clock lines (22) for forced synchronisation and reset lines (23) for switching off a computer unit, wherein when a computing unit is switched off by means of the reset signals, the computing unit no longer takes part in parallel operation and transitions to a wait setting, wherein each computing unit has a microprocessor control unit (14a, 14b) for controlling the function of the computing unit, for carrying out a data comparison, data exchange and for error processing, and a reset circuit (16) for error-tolerant switching off of an adjacent computing unit,
**characterised in that** the data lines (21), clock lines (22) and reset lines (23) are cross-strapping connections and **in that** the computing units have a circuit (19) for generating a unique identifier assigned to the computing unit and a random access memory (9) having an apparatus for error detection and correction.

2. The device according to Claim 1, **characterised by** an external memory device (7) assigned to each computing unit (1).

3. The device according to Claim 1 or 2, **characterised by** at least one application processor (5), which is connected to at least one computing unit (1) by means of a multi-processor bus, such as a VME bus (6).

4. The device according to one of Claims 1 to 3, **characterised in that** the module is a processor pool element and has a read-only memory for programs for controlling the computing unit, which can be erased and programmed electrically.

5. The device according to Claim 4, **characterised in that** the processor pool element module has a standardised parallel bus interface having data and control lines for connecting the computing unit to at least one serial bus.

6. The device according to one of Claims 4 or 5, **characterised in that** the processor pool element module has an error-tolerant clock generator circuit (15) for the forced synchronisation of the computing unit (1) with other computing units and also a second cross-strapping interface (11b) assigned to the same, for serial connection to other computing units.

7. The device according to one of Claims 4 to 6, **characterised in that** the processor pool element module has a circuit (16) for error-tolerant reset control and also a third cross-strapping interface (11b) assigned to the same for remote reset control.

## Revendications

1. Dispositif avec plusieurs unités de calcul travaillant en parallèle, lequel convient pour l'exécution tolérante aux pannes de programmes de calcul numérique par exploitation parallèle d'unités de calcul réalisées en tant qu'unités de redondance, dans lequel chaque unité de calcul (1) est réalisée en tant que module, et un nombre au choix d'unités de calcul pouvant être connectées en parallèle via des lignes de transmission de données (21) pour l'échange de signaux de données, des lignes d'horloge (22) pour la synchronisation forcée et des lignes de remise à zéro (23) pour la déconnexion d'une unité de calcul, dans lequel, lors de la déconnexion d'une unité de calcul au moyen des signaux de remise à zéro, l'unité de calcul ne participe plus à l'exploitation parallèle et passe dans un mode de veille, dans lequel chaque unité de calcul présente une unité de commande à microprocesseur (14a, 14b) pour la commande des fonctions de l'unité de calcul, pour l'exécution d'une comparaison de données, de l'échange de données et pour le traitement d'erreurs ainsi qu'un circuit de remise à zéro (16) pour une déconnexion tolérante aux pannes d'une unité de calcul voisine,
**caractérisé en ce que** les lignes de transmission de données (21), les lignes d'horloge (22) et les lignes de remise à zéro (23) sont des liaisons d'interconnexion et **en ce que** les unités de calcul présentent un circuit de commutation (19) pour la génération d'une identification univoque associée à l'unité de calcul et une mémoire de lecture/écriture (9) avec un dispositif pour la reconnaissance et la correction d'erreurs.

2. Dispositif selon la revendication 1, **caractérisé par** un dispositif de mémoire (7) externe associé à chaque unité de calcul (1).

3. Dispositif selon la revendication 1 ou 2, **caractérisé par** au moins un processeur applicatif (5) qui est connecté via un bus multiprocesseurs, tel un bus VME (6), à au moins une unité de calcul (1).

4. Dispositif selon l'une des revendications 1 à 3, **caractérisé en ce que** le module est un élément de groupe de processeurs et présente une mémoire de lecture effaçable et programmable électriquement pour des programmes pour la commande de l'unité de calcul.

5. Dispositif selon la revendication 4, **caractérisé en ce que** le module d'élément de groupe de processeurs présente une interface de bus parallèle standardisée avec des lignes de transmission de données et de commande pour connecter l'unité de calcul à au moins un bus série.

6. Dispositif selon l'une des revendications 4 ou 5, **caractérisé en ce que** le module d'élément de groupe de processeurs présente un circuit d'horloge tolérant aux pannes (15) pour la synchronisation forcée de l'unité de calcul (1) avec d'autres unités de calcul ainsi qu'une deuxième interface d'interconnexion (11b) qui est associée à celui-ci pour la connexion série avec d'autres unités de calcul.

7. Dispositif selon l'une des revendications 4 à 6, **caractérisé en ce que** le module d'élément de groupe de processeurs présente un circuit (16) pour la commande de remise à zéro tolérante aux pannes ainsi qu'une troisième interface d'interconnexion (11b) qui est associée à celui-ci pour la commande à distance de remise à zéro.
